(19)

**Europäisches Patentamt**
**European Patent Office**
**Office européen des brevets**

(11) **EP 1 332 601 B1**

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(21) Anmeldenummer: **01993098.1**

(22) Anmeldetag: **31.10.2001**

(51) Int Cl.:
*H04L 29/06* *(2006.01)*   *H04L 12/56* *(2006.01)*

(86) Internationale Anmeldenummer:
**PCT/DE2001/004122**

(87) Internationale Veröffentlichungsnummer:
**WO 2002/037789 (10.05.2002 Gazette 2002/19)**

(54) **VERFAHREN ZUM AUSTAUSCH VON DATENPAKETEN ZWISCHEN ZWEI DIENSTEERBRINGERN EINES FUNKÜBERTRAGUNGSSYSTEMS**

METHOD FOR EXCHANGING DATA PACKETS BETWEEN TWO SERVICE PROVIDERS OF A RADIOTELEPHONY TRANSMISSION SYSTEM

PROCEDE D'ECHANGE DE PAQUETS DE DONNEES ENTRE DEUX PRESTATAIRES DE SERVICES D'UN SYSTEME DE TRANSMISSION RADIO

(84) Benannte Vertragsstaaten:
**DE FI FR GB IT SE**

(30) Priorität: **03.11.2000 DE 10054473**

(43) Veröffentlichungstag der Anmeldung:
**06.08.2003 Patentblatt 2003/32**

(73) Patentinhaber: **SIEMENS AKTIENGESELLSCHAFT**
**80333 München (DE)**

(72) Erfinder:
• **ECKERT, Michael**
  **38122 Braunschweig (DE)**
• **OTTE, Andreas**
  **29227 Celle (DE)**
• **BECKMANN, Mark**
  **38102 Braunschweig (DE)**
• **HANS, Martin**
  **31139 Hildesheim (DE)**

(56) Entgegenhaltungen:
**WO-A-00/21253**

• **3RD GENERATION PARTNERSHIP PROJECT: "ARIB STD-T63-25.301 V3.3.0 Radio Interface Protocol Architecture" 3RD GENERATION PARTNERSHIP PROJECT, 31. Dezember 1999 (1999-12-31), Seiten 1-48, XP002204734 Valbonne, France**

**Beschreibung**

**Problematik**

In einem Mobilfunksystem der 3. Generation werden Daten in Paketform über die Luftschnittstelle von einer Basisstation zu einer Mobilfunkstation oder in entgegengesetzter Richtung übertragen.

In der Basisstation und der Mobilfunkstation befindet sich dabei ein Verbindungskontrollprotokoll, dessen Aufgabe es unter anderem ist, an Hand von Kontrolldaten festzustellen, ob und welche Datenpakete während der Übertragung verloren gegangen sind. Diese Kontrolldaten müssen zu jedem vom Verbindungskontrollprotokoll versendeten Paket hinzugefügt werden. Innerhalb eines sogenannten Übertragungszeitintervalls können mehrere Pakete übertragen werden. Die Anzahl der zu übertragenden Pakete kann dabei von Intervall zu Intervall variieren. Dies ermöglicht unterschiedliche Datenübertragungsraten. In dieser Erfindung wird ein Verfahren vorgestellt, das es ermöglicht die Anzahl der über die Luftschnittstelle versendeten Pakete zu reduzieren in dem statt mehrerer Pakete, größere Pakete in einem Übertragungszeitintervall übertragen werden. Dabei wird die Möglichkeit der Variation von Datenübertragungsraten nicht eingeschränkt.

**Stand der Technik**

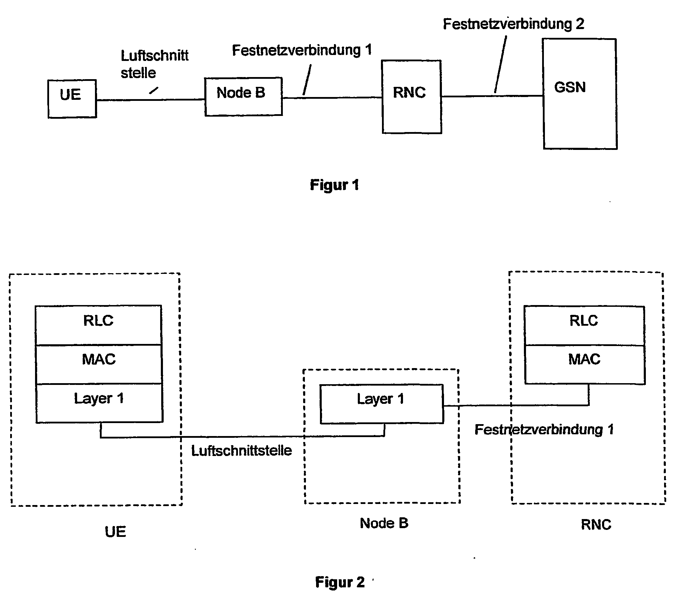

In dem Mobilfunksystem der 3. Generation UMTS (Universal Mobile Telecommunication System) sind die Mobilfunkstationen, in UMTS UEs (User Equipment) genannt, über eine Luftschnittstelle mit einer Basisstation, in UMTS Node B genannt, verbunden. Die Node B wiederum ist über eine erste Festnetzverbindung mit einem Funk-Netzwerkregler RNC (Radio Network Controller) verbunden, der wiederum mit einer Netzwerkeinheit GSN (GPRS Support Node) über eine zweite Festnetzverbindung verbunden ist (Figur 1).

Die Figur 2 zeigt den Aufbau des UEs, der Node B und des RNCs, wobei hier nur die Schichten 1 und 2, die im OSI Modell mit physical layer (physikalische Schicht) und Link Layer (Verbindungsschicht; hier bestehend aus MAC und RLC) bezeichnet werden, zu sehen sind. Wenn es sich bei den zu versenden Daten um Kontrolldaten handelt, befindet sich oberhalb der mit RLC bezeichneten Schicht die Funk-Resourcen-Regelung RRC (Radio Resource Control), die nicht in Figur 2 dargestellt ist. Zu übertragen Nutzdaten, werden in Paketform entweder direkt von höheren Schichten an die RLC Schicht gegeben oder von der ebenfalls nicht in Figur 2 eingezeichneten und für diese Erfindung nicht relevanten Packetdaten-Konvergenz-Protokollschicht an die RLC Schicht gegeben. In jedem Fall werden die Daten im Sender von der jeweiligen Schicht bearbeitet und dann an die nächste darunter liegende Schicht weitergegeben. So gibt die RLC Schicht die Pakete an die Medium Zugangs Kontrolle MAC (Medium Access Control), welche die Pakete wiederum bearbeitet und anschließend an die Layer 1 Schicht gibt. Innerhalb einer Schicht heißen die Pakete, die von einer höheren Schicht empfangen wurden, SDUs (Service Data Units) und die Pakete, die an unter ihr liegende Schichten weitergegeben werden PDUs (Packet Data Unit).

Layer 1 sendet die Daten schließlich über die Luftschnittstelle an die Basisstation Node B, in der sich ebenfalls die Layer 1 Schicht befindet. Diese gibt die empfangenen Pakete über die Festnetzverbindung an den MAC im RNC, welcher die Pakete nach Bearbeitung weiter an den RLC gibt, der die Pakete letztendlich an die höheren Schichten weiterleitet.

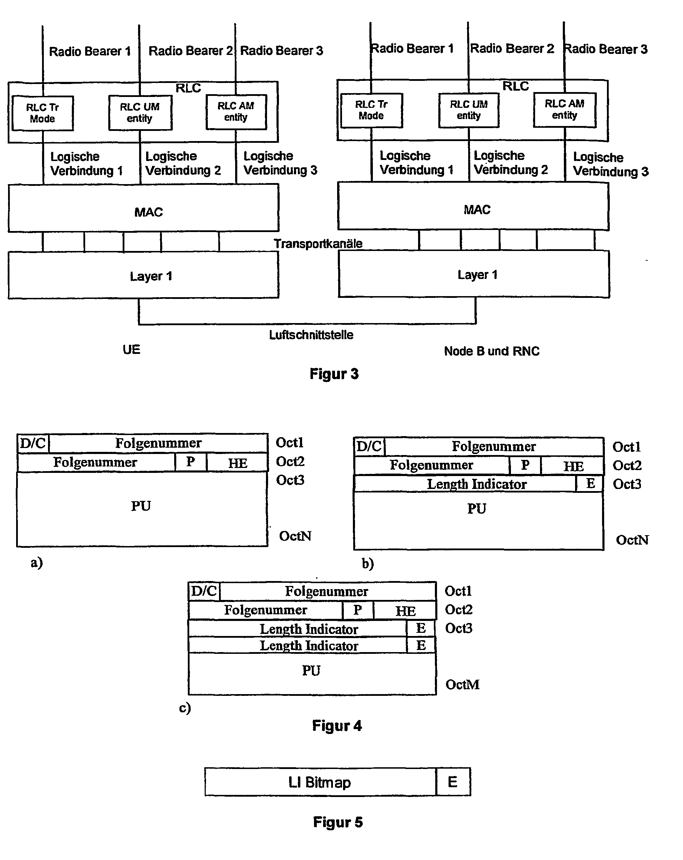

Figur 3 zeigt die Verbindungsschicht RLC und die Medium Access Kontrolle MAC. Wie schon erwähnt, befinden sich oberhalb von RLC weitere Schichten, die für diese Erfindungsmeldung nicht weiter von Bedeutung sind. Diese höheren Schichten geben Ihre Pakete über sogenannte Funkträger (Radio Bearer) an RLC weiter. Der RLC besteht aus mehreren Einheiten, die in verschiedenen Modi laufen können, dabei können mehrere Einheiten im gleichen Mode laufen. Im transparenten Mode (Tr Mode) werden den Paketen, die von höheren Schichten empfangen wurden, keine Kontrolldaten hinzugefügt. Dieser Mode ist daher für diese Erfindung nicht relevant.

Im sogenannten un-acknowledged Mode (UM Mode) werden die von den höheren Schichten empfangenen Pakete (SDUs) segmentiert oder in größere Pakete zusammengefaßt. Den Paketen, die anschließend anoden MAC weitergegeben werden (PDUs), wird eine Folgenummer hinzugefügt. An Hand dieser wird auf Empfängerseite festgestellt, ob zwischen dem Empfang zweier PDUs ein oder mehrere Pakete nicht empfangen wurden. Die Größe der PDUs in die die SDUs segmentiert bzw. zusammengefaßt werden ist variabel und wird von der MAC Schicht vorgegeben. Die Anwendung dieser Erfindung für diesen Mode ist denkbar um die Realisierung in der Software zu erleichtern, da die Pakete vorsegmentiert werden könnten und nicht erst in dem Moment segmentiert werden können, wenn die PDU Größe von MAC vorgegeben wird.

Im sogenannten acknowledged Mode (AM Mode) werden die SDUs in Pakete gleicher Größe, sogenannte Payload Units (PUs), segmentiert bzw. zusammengefaßt. Um der empfangenden RLC Einheit das korrekte Zusammenbauen der ursprünglichen, von höheren Schichten an die RLC Einheit gegebenen SDUs zu ermöglichen beinhalten die PUs Indikatoren, die der empfangenden RLC Einheit mitteilen wo eine SDU innerhalb eines Segments endet. Diese Indikatoren werden Length Indicator genannt. Weiterhin wird nach momentanem Stand der Technik jedem dieser Segmente zusätzlich eine Information (D/C), die angibt ob es sich um ein Daten- oder Kontrollpaket handelt, eine Folgenummer, eine sogenannte Kontrolldaten-Erweiterungs-Information (HE), die angibt ob das nächste Oktett einen oben beschriebenen Length Indicator enthält oder bereits Nutzdaten, und ein sogenanntes Polling bit, das für den Empfangsbestätigungs-Mechanismus verwendet werden kann, hinzugefügt. Das D/C- und das P- Feld sind für diese Erfindung nicht von Interesse. Die Figuren 4a und 4b zeigen den Aufbau der beispielsweise aus der WO 00/21253 bekannten PDUs. Das 3. Oktett der in Fig.4b dargestellten PDU repräsentiert den im Folgenden auch als LI bezeichneten Length Indicator, da eine SDU innerhalb der PU endet.

MAC teilt dem RLC mit, wie viele der PDUs im nächsten Übertragungsintervall über die Luft übertragen werden sollen. Die Größe der PDUs ist statisch. Dadurch kann RLC die PU-Größe an Hand der PDU-Größe festlegen, da die PDU- Größe genau der PU-Größe + 2 Bytes entspricht. Endet eine SDU innerhalb einer PDU bzw. PU, und wird der restliche Platz dieser PDU bzw. PU mit Padding gefüllt, so wird der PDU bzw. PU ein weiterer LI hinzugefügt, dessen festgesetzter Wert angibt, dass die PU mit Padding aufgefüllt wurde. Figur 4b zeigt eine PU in der eine SDU endet, der Rest der PDU jedoch mit einem ersten Segment einer zweiten SDU gefüllt wird. Das erste Bit von rechts, ist ein Extension Bit (E), das angibt, ob dem LI ein weiterer LI oder Nutzdaten folgen. Es wird also nur ein LI benötigt. Figur 4c zeigt eine PDU, in deren PU eine SDU endet und der Rest der PU mit Padding aufgefüllt werden muss. Es sind somit zwei LIs notwendig. Ein LI der angibt, dass eine SDU innerhalb der PU endet und ein zweiter, der angibt, dass die PU mit Padding aufgefüllt wurde.

Die PDUs werden über die logischen Verbindungen an den MAC weitergegeben und schließlich über die Luftschnittstelle übertragen. Empfängerseitig werden die Pakete von MAC wiederum über die logischen Verbindungen an RLC gegeben. Wie der Name schon sagt wird im AM-Mode der Empfang eines Pakets durch die empfangende RLC Einheit bestätigt. Dafür sind in [1] mehrere Mechanismen beschrieben. So kann z.B. eine RLC Einheit nach Ablauf eines Timers eine Bestätigung für alle Pakete senden, die sie seit dem Senden der letzten Bestätigung empfangen hat. Oder die sendende RLC Einheit kann in einem Paket über eine zusätzliche Information (das Polling bit), die empfangendenRLC Einheit auffordern eine Bestätigung zurückzusenden.

Pakete, die von der empfangenden Seite nicht bestätigt wurden, werden dann von der sendenden RLC Einheit noch einmal gesendet. Dafür müssen alle gesendeten PDUs in der RLC Einheit gespeichert werden bis eine positive Empfangsbestätigung empfangen wird. Da die Paketgröße aller gespeicherten Pakete gleich ist und der MAC immer eine Anzahl von Pakete dieser Größe anfordert, können die noch einmal zu versendenden Pakete jederzeit problemlos an MAC weitergegeben werden. Dadurch kann es vorkommen, daß nach einer PDU mit der Folgenummer 10 eine PDU mit der Folgenummer 5 gesendet wurde und erst anschließend die PDU mit der Folgenummer 11 folgt. Über die PU Größe wird die kleinst mögliche Übertragungsrate für einen logischen Kanal festgelegt. Über die Anzahl der PDUs, die von MAC angegeben wird, kann diese Übertragungsrate nach oben variiert werden.

## Kern der Erfindung

Bereits für die 99er Version des RLC wurde diskutiert mehrere PUs in einer PDU zu transportieren. ANNEX A enthält die Beschreibung des Konzepts, wie es für die 99er Version vorgeschlagen wurde und in der Spezifikation des RLC TS 25.322 v3.0.0 enthalten war. Dies hat den Vorteil, daß es immer noch möglich ist die Datenübertragungsraten zu variieren in dem man die Anzahl der PUs pro PDU festlegt, jedoch nur einmal Kontrolldaten (Folgenummer, D/C-, HE- und P-Feld) für die eine, größere PDU über die Luftschnittstelle zu versenden braucht. Die Folgenummer sollte dann nur die Folgenummer der ersten PU angeben. Die Folgenummern der nachfolgenden PUs konnten daraus berechnet werden.

Das Konzept für die 99er Version sah vor, alle LIs der PUs, die in einer PDU enthalten waren, in der Reihenfolge der PUs der Folgenummer folgen zu lassen. Wenn PUs, die keinen LI benötigten, und PUs, die einen LI benötigten, zusammen in einer PDU transportiert werden sollten, ergab sich dabei das Problem der Zuordnung von LIs zu den PUs, welches nicht gelöst wurde.

Das gleiche galt für PUs, die nicht in der richtigen Reihenfolge zu den anderen PUs einer PDU waren. Es wurde eine Kontrolldaten-Erweiterung vorgeschlagen in der die Folgenummer der PU außerhalb der Reihenfolge der ersten Folgenummer folgen sollte. Da auch hier die Zuordnung der zweiten Folgenummer zur PU nicht möglich war, war die Lösung, für alle enthaltenen PUs die Folgenummern hinzuzufügen. Dies hatte den Nachteil, daß die Reduzierung der Kontrolldaten nicht mehr möglich war.

Außerdem sollte der Platz den die Kontrolldatenerweiterungen in Anspruch nahmen von der PU Größe abgezogen werden. Dadurch konnten die einmal versendeten PUs nicht ohne weiteres noch einmal versendet werden, da sie bei der wiederholten Übertragung eventuell keine Kontrolldatenerweiterung benötigten. Die PU Größe somit nicht mehr gleich der zum ersten mal versendeten PU war.

Die Grundbedingung für diese Erfindung war, daß von höheren Schichten empfangene SDUs in PUs vorsegmentiert werden sollten und diese PUs dann bis zur Bestätigung des Empfangs durch die empfangende RLC Einheit in der sendenden RLC Einheit gespeichert und nicht mehr verändert werden sollten auch wenn sie noch einmal übertragen werden müssen. Die Length Indicatoren, die das Ende einer SDU innerhalb einer PU angeben, sind sinnvollerweise Teil der PU, da auch sie sich nicht ändern.

Weiterhin wird gemäß dieser Erfindung zwischen zwei verschiedenen Arten von Padding unterschieden, dem Padding innerhalb einer PU, im folgenden PU Padding genannt, und dem Padding innerhalb einer PDU, im folgenden PDU Padding genannt.

Mit PDU Padding ist dabei das Padding innerhalb einer PDU gemeint, das notwendig ist weil z.B. die PDU eine Anzahl n PUs und die dazu gehörigen Kontrolldaten (D/C, HE, P Feld und Sequence Number) faßt, jedoch noch Platz in der PDU übrig ist, der kleiner ist als eine PU Größe und somit PDU Padding eingefügt werden muß. Ob eine PDU ein solches PDU Padding enthält, kann mit Hilfe der Kenntnis der PDU Größe und der Größe der Kontrolldaten ermittelt werden. Es ist also keine zusätzliche Signalisierung notwendig.

Mit PU Padding ist das Padding innerhalb einer PU gemeint, das notwendig ist weil z.B. eine SDU in einer PU endet und sie nicht vollständig füllt und kein Segment einer weiteren SDU eingefügt wird. Um anzuzeigen daß die PU Padding enthält wird der Spezial-Length Indicator, der in der momentan gültigen Version angibt daß die PDU Padding enthält, der PU hinzugefügt. Er gibt also an, daß nicht der Rest der PDU sondern der Rest der PU Padding ist.

Kern der Erfindung ist ein Length Indicator Bitmap (LI-Bitmap), der in einer PDU enthalten sein soll, wenn mehr als eine PU in der PDU enthalten ist. Der LI Bitmap kann 8 oder 16 bit lang sein. Die Anzahl der PUs pro PDU ist auf 8 bzw. 16 beschränkt, wenn man ein 8 bzw. 16 Bit langes LI-Bitmap gewählt wird. Besonders vorteilhaft wäre daher auch ein LI Bitmap wie es in Figur 5 dargestellt ist, in dem das letzte Bit, ein Extension-Bit (E bit; Erweiterungs-Bit), angibt, ob ein weiteres LI-Bitmap im nächsten Okett folgt. Damit kann das LI-Bitmap der Anzahl der PUs, die transportiert werden sollen variiert werden. Jedes Bit des LI-Bitmap gibt an ob eine dem Bit zugeordnete PU mit einem LI oder mit Nutzdaten anfängt.

Ein weiterer wichtiger Teil dieser Erfindung ist die folgende Festlegung: Falls PUs, die zum wiederholten Male übertragen werden müssen, und PUs, die zum ersten Mal übertragen werden in einer PDU übertragen werden sollen, so soll festgelegt sein an welcher Stelle die zum zum wiederholten Male zu übertragenden PUs und an welcher Stelle die zum ersten Mal zu übertragenden PUs in der PDU enthalten sind. Eine Möglichkeit wäre z.B festzulegen, daß die PUs, die zum wiederholten Male übertragen werden müssen zuerst in die PDU eingefügt werden müssen.

Zusätzlich wird, wie schon früher für die 99er Version vorgeschlagen, ein 16 bit langes Zusatzfeld, eine Kontrolldaten-Erweiterung, für jede der PUs eingefügt, die zum wiederholten Male übertragen werden müssen. Diese enthält eine Folgenummer, eine Erweiterungsinformation, z.B. ein Bit, die angibt ob eine weitere Kontrolldaten-Erweiterung folgt und ein Feld, das für bisher noch nicht spezifizierte Zwecke verwendet werden kann.

Weiterhin wird gemäß dieser Erfindung festgelegt, daß eine Regelung gelten soll, welche Folgenummern zu welchen PUs zugeordnet sind. Eine mögliche Regelung wäre zum Beispiel die Folgenummern, die den zum wiederholten Mal zu übertragenden PUs zugeordnet sind, immer in der Kontrolldatenerweiterung zu transportieren und die Folgenummer der ersten, in der richtigen Reihenfolge zu übertragenden PU, im ersten Folgenummer Feld zu transportieren.

Besonders vorteilhaft wäre folgende Kombination aus Eintragung der Folgenummern und Plazierung der PUs: Die Folgenummer, die in das erste Folgenummernfeld eingetragen wird ist die der als nächste zum ersten Mal zu übertragenden PU. Die Folgenummern der zum wiederholten Male zu übertragenden PUs sollen in den Kontrolldaten-Erweiterungen transportiert werden. Die erste zum ersten Mal zu übertragende PU soll nach den zum wiederholten Mal zu übertragenden PUs in die PDU eingefügt werden. Weitere PUs, die zum ersten Mal übertragen werden sollen, folgen dieser PU in der PDU. Für sie muß keine Folgenummer eingefügt werden, da sich die Folgenummer dieser PUs immer nur um eins erhöht. Ist eine ganze PDU mit PUs gefüllt, die zum wiederholten Mal übertragen werden und diese PUs sind in einer Reihenfolge, so wird die PDU aufgebaut als wenn es sich um eine PDU handelt, die ausschließlich mit bisher noch nicht gesendeten PUs gefüllt ist.

Stehen PUs, die zum wiederholten Mal übertragen werden müssen und PUs, die zum ersten Mal übertragen werden sollen bereit, so wird in dieser Erfindung vorgeschlagen, daß die Anzahl der zum ersten Mal zu übertragenden PUs und die Anzahl der zum wiederholten Mal zu übertragenden PUs von MAC bei RLC abgefragt werden, so daß der MAC eine ideale Kombination von Anzahl und Größe der PDUs auswählen kann.

Weiterhin wird in dieser Erfindung vorgeschlagen, daß RLC PUs generiert, die nur PU Padding enthalten, falls MAC eine PDU von RLC verlangt, die Größer ist als die zur Übertragung bereit stehenden PUs und der aufzufüllende Platz in der PDU größer ist als eine PU. Einer solchen von RLC generierte PU wird dabei keine Folgenummer zugewiesen und auf Empfängerseite wird die PU ignoriert bzw. gelöscht.

**Beschreibung der Ausführungsbeispiele**

Die Ausführungsbeispiele gehen von einer Verbindung gemäß Figur 2 aus. Es wird angenommen daß die AM RLC Einheit ein Paket SDU1 der Größe 100 byte von dem zugehörigen Radio Bearer 3 enthalten hat. Beim Aufbau des Radio Bearers 3, wurde für die zugehörigen AM RLC Einheit des Senders und des Empfängers festgelegt, daß die PUs eine Größe von 30 Byte haben sollen. Sender und Empfänger können dabei entweder RNC oder UE sein. Dafür tauschen die RRC Schichten, die oberhalb der RLC Schichten sitzen Informationen aus, mit denen die jeweilige RRC Schicht die anderen, unter ihr liegenden Schichten konfiguriert. Im Gegensatz zum Stand der Technik wird die PU Größe also nicht aus der von MAC vorgegebenen PDU Größe berechnet sondern durch die RRC Schicht festgelegt.

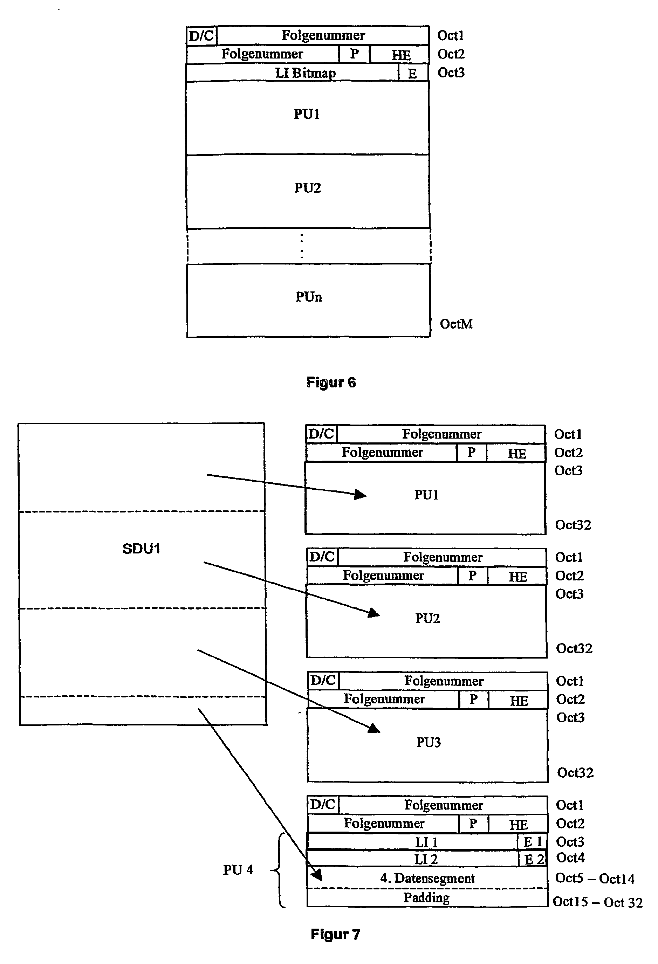

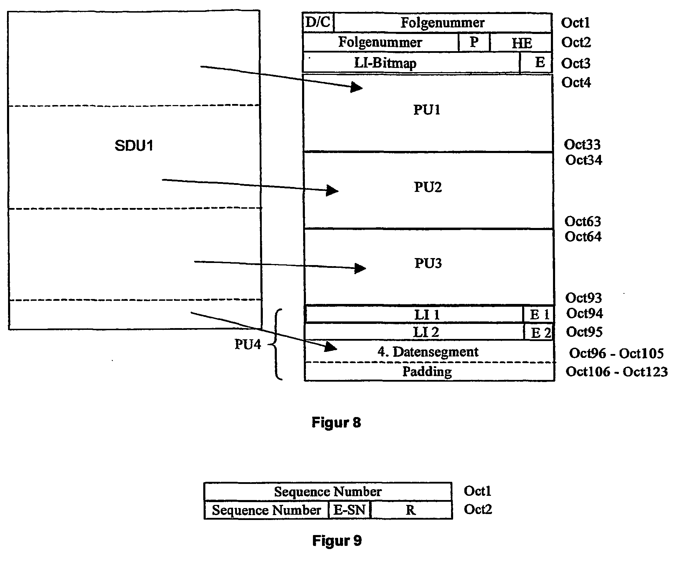

Die SDU1 wird nun in 4 PUs, PU1 bis PU4 segmentiert. Die 4 PUs werden mit den Folgenummern 10-13 nummeriert. Die ersten 3 PUs sind komplett mit Daten gefüllt. Die vierte PU enthält nur 10 bytes der SDU1. Es wird beispielhaft angenommen, daß die AM RLC Einheit keine weiteren Daten zu versenden hat, so daß die vierte PU mit zwei Length Indicatoren (LI) beginnen muß (siehe Figur 7 und 8). Der erste LI sagt aus, daß die SDU1 nach 10 byte nach den LI Feldern endet, das folgende Extension bit (Erweiterungsbit) E1 gibt an, daß ein weiteres LI Feld folgt. In diesem Beispiel soll ein auf 1 gesetztes Bit angeben, daß ein weiterer LI folgt. Der zweite LI sagt aus, daß der Rest der PU Padding enthält (PU Padding), da keine weiteren Daten enthalten sind. Das folgende Extension bit E2 wird auf 0 gesetzt da kein weiteres LI Feld folgt. Die vier PUs werden anschließend in der AM RLC enitity gespeichert. Der MAC teilt dem RLC nun für jeden logischen Kanal mit, in diesem Beispiel also für die logischen Kanäle 1-3, wie groß die RLC PDUs sein sollen und wie viele PDUs dieser Größe der MAC von der entsprechenden RLC Einheit empfangen möchte. Mit Hilfe dieser Parameter stellt der MAC die Datenrate für jeden logischen Kanal zu dem Zeitpunkt der Anfrage nach den PDUs ein. Die Auswahl der Anzahl und Größe der PDUs basiert unter anderem darauf, daß MAC zum einen die Anzahl der PUs, bzw. des Speichers die diese belegen, der zum ersten Mal zu übertragenden PUs von der AM RLC Einheit anfragt und zusätzlich die Anzahl der PUs, bzw. der Speicher den diese belegen, der zum wiederholten Male übertragen werden sollen von der AM RLC Einheit abfragt.

Beim Aufbau des Radio Bearers wurden dem MAC auch mögliche Kombinationen von RLC PDU Größen und Anzahl mitgeteilt, die er verwenden kann um die Daten zu übertragen. Für alle Beispiele soll angenommen werden, daß dem MAC folgende Kombinationen zur Verfügung stehen:

Kombination 1: 1 PDU; Größe 32 byte
Kombination 2: 2 PDUs; Größe 32 byte
Kombination 3: 3 PDUs; Größe 32 byte
Kombination 4: 4 PDUs; Größe 32 byte
Kombination 5: 1 PDU; Größe 123 byte
Kombination 6: 1 PDU; Größe 93 byte
Kombination 7: 1 PDU; Größe 63 byte

Für das 1. **Ausführungsbeispiel** wird nun angenommen, daß der MAC von der AM RLC Einheit erfahren hat, daß 4 PUs zum ersten Mal und keine PUs zum wiederholten Male übertragen werden sollen. Weiterhin wird angenommen daß sich der MAC entscheidet die 4 PUs gleichzeitig wegzuschaffen. Will MAC nun 4 PUs von je 30 Byte übertragen, kann er zwischen der Kombination 4 und Kombination 5 wählen. Kombination 4 entspricht einer Kombination, wie sie auch in der 99er Version verwendet werden kann. Jede PDU trägt genau eine PU. Die PDU Größe ist idealerweise so gewählt, daß die PDU die PU und die Sequence Number (Folgenummer) sowie Header Extension HE und Polling bit P und D/C Feld enthalten kann (siehe Figur 4a). PU Größe ist 30 Bytes, Sequence Number, HE, P und D/C Feld benötigen insgesamt 2 Bytes, wodurch die PDU Größe idealerweise 32 Byte beträgt. Um alle vier PUs zu übertragen müssen somit 128 Bytes übertragen werden.

Kombination 5 nutzt die Vorteile dieser Erfindung. In der einen PDU sind alle 4 PUs enthalten. Die Größe ergibt sich idealerweise aus der Datenmenge (=4PUs = 120 Bytes) und 3 zusätzlichen Bytes, die durch die Sequence Number, HE, P und D/C Feld und zusätzlich dem LI-Bitmap belegt werden siehe Figur 6). Insgesamt müssen somit 123 byte übertragen werden. Die Kombinationen (PDUs und PDU Größe) werden immer vom Netzwerk vorgegeben.

Für dieses 1. Ausführungsbeispiel wird nun angenommen, der MAC fordert Daten in der Kombination 4 an. Die RLC AM Einheit bildet aus den 4 PUs 4 PDUs, PDU1 bis PDU4 (siehe Figur 7). Jede PDU enthält die Folgenummer der PU, für dieses Beispiel wird angenommen daß die Folgenummer=10 für PDU1 und Folgenummer=11 für PDU2 usw. betragen soll. Das D/C Feld wird auf 1 gesetzt, da es sich bei den Daten um Nutzdaten handelt. Das P-feld kann auf 1 gesetzt werden, wenn eine Empfangsbestätigung der bisher versendeten PDUs durch die empfangende AM RLC Einheit erfolgen soll. Das HE Feld wird bei den PDUs 1 bis 3 auf 0 gesetzt, da nach dem HE Feld Nutzdaten folgen. Bei der PDU4 folgen dem HE Feld Length Indicators, daher wird das HE Feld auf 1 gesetzt.

MAC gibt die 4 PDUs dann an die Layer 1 Schicht und die Daten werden letztendlich über die Luftschnittstelle übertragen.

Auf der Empfängerseite werden die Daten von der Layer 1 Schicht an den MAC gegeben, der dann die 4 PDUs wieder an die AM RLC Einheit gibt. An Hand der Sequence Number kann die Reihenfolge der PUs erkannt werden. Durch das HE Feld einer jeden PDU erkennt die AM RLC Einheit, ob dem HE-Feld Nutzdaten oder Length Indicator folgen. In den RLC PDUs 1 bis 3 gibt das HE-Feld an, daß kein LI-Bitmap oder LI Feld folgt. Daraus erkennt die empfangende AM RLC Einheit zusätzlich, daß kein LI-Bitmap enthalten ist und somit nur 1 PU in die PDU paßt. Die AM RLC Einheit kennt die PU Größe und entnimmt ein entsprechend großes Segment nach den ersten zwei Bytes der PDU, welche den PUs entsprechen.

In der RLC PDU4 ist das HE-Feld auf 1 gesetzt. Die AM RLC Einheit, analysiert also LI1 und erhält somit die Information, daß die SDU1 nach den ersten 10 byte nach den LIs endet. Das erste Extension bit (Erweiterungsbit) ist auf 1 gesetzt, wodurch die AM RLC Einheit erkennt, daß ein weiterer LI folgt. Dieser zweite LI teilt der AM RLC Einheit mit, daß der Rest der PU ignoriert werden kann, da es mit PU Padding gefüllt ist. Das folgende Extension bit E2 ist auf 0 gesetzt, wodurch die AM RLC Einheit weiß daß nun die Nutzdaten folgen. Die AM RLC Einheit fügt dann die fehlenden 10 byte Nutzdaten den anderen 3 PUs hinzu, wodurch sich wieder die originale SDU1 ergibt, die dann an über den Radio Bearer 3 an die höheren Schichten weitergegeben werden.

Im **2. Ausführungsbeispiel** wird nun angenommen, daß MAC die Kombination 5 ausgewählt hat, wie es durch diese Erfindung ermöglicht wird. Wählt der MAC diese Kombination, bildet die AM RLC Einheit eine einzige PDU der Größe 123 Byte (siehe Figur 8). Die ersten zwei Byte beinhalten wiederum die Folgenummer, deren Wert der ersten PU zugeordnet wird (Folgenummer = 10), das D/C Feld, dem der Wert 1 zugewiesen wird, da es sich bei der PDU um ein Datenpaket handelt, das P und das HE Feld, welches erfindungsgemäß auf einen Wert, beispielsweise 2, gesetzt wird der bedeutet, daß das folgende Byte einen LI-Bitmap enthält. Das dritte Byte enthält also den LI-Bitmap. Das letzte Bit des dritten Bytes enthält wiederum das Extension Bit, das angibt ob ein weiteres LI-Bitmap oder die erste PU folgt, welches in diesem Fall beispielsweise auf 0 gesetzt wird, um anzuzeigen, daß kein weiteres LI-Bitmap folgt.

Jedes Bit des 7 bit langen LI-Bitmaps gibt an, ob die zugehörige PU mit einem LI beginnt oder nur Nutzdaten enthält. In diesem Ausführungsbeispiel soll das Bit ganz rechts zur ersten in die PDU eingefügten PU zugeordnet sein und das Bit ganz links dem an 7er Stelle eingefügten PU zugeordnet sein. In diesem Ausführungsbeispiel werden die vier PUs 1 bis 4 in die PDU eingefügt, so daß die ersten 4 Bits von rechts des LI-Bitmaps verwendet werden. PU4 ist die einzige der 4 PUs, die mit einem LI anfängt. Daher wird das von rechts vierte Bit des LI-Bitmaps auf 1 gesetzt.

Die PDU wird von RLC dann an MAC weitergegeben und schließlich über die Luftschnittstelle versendet. Dort gibt die Layer1 Schicht die Daten an den MAC weiter, der die PDU schließlich an die AM RLC Einheit weiterleitet und dabei auch der AM RLC Einheit mitteilt wie groß die PDU ist. Die AM RLC Einheit weiß an Hand der Folgenummer, welche Folgenummer der ersten PU zugeordnet werden muß. Allen weiteren PUs werden in der Reihenfolge in der sie in der PDU enthalten sind Folgenummern zugewiesen, die sich jeweils um ens erhöhen. An Hand des HE Feldes erkennt die AM RLC Einheit, daß das 3. byte ein LI-Bitmap enthält. Am Extension Bit E1 des 3. Bytes erkennt die AM RCL Einheit daß kein weiteres LI-Bitmap sondern die erste PU folgt. Die AM RLC Einheit kennt die PU Größe und kann daraus mit Hilfe der PDU Größe und der Kenntnis, daß 3 Bytes für die Kontrolldaten (Sequence Number, D/C, P, HE Feld und LI-Bitmap und Extension Bit) verwendet wurden, die maximale Anzahl der PUs bestimmen, die in der PDU enthalten sein kann:

$$\text{Anzahl der PUs} = (\text{PDU-Größe} - \text{Kontrolldaten})/\text{PU-Größe}$$

Mit Hilfe des LI-Bitmaps bestimmt die AM RLC Einheit dann welche der PUs mit einem LI beginnen. In diesem Ausführungsbeispiel ist nur das von rechts 4. Bit auf 1 gesetzt. Die AM RLC Einheit entnimmt die PUs aus der PDU und fügt die ersten 3 PUs zusammen, da diese lediglich Nutzdaten enthalten. Das erste Byte der vierten PU teilt der AM RLC Einheit mit, daß die SDU1 nach dem ersten 10 Byte nach den LIs endet. Das Extension Bit E1 teilt der AM RLC Einheit weiterhin mit daß ein weiterer LI folgt. Dieser LI2 gibt an, daß der Rest der PU ignoriert werden soll. Das zugehörige Extension Bit E2 gibt an daß Nutzdaten folgen. Die AM RLC Einheit entnimmt der PU4 die folgenden 10 Byte, fügt sie den PUs 1 bis 3 hinzu, wodurch sich die ursprüngliche SDU1 ergibt. Diese wird anschließend von der AM RLC Einheit an die höheren Schichten weitergereicht.

Im folgenden **3. Ausführungsbeispiel** wird nun davon ausgegangen, daß die erste Übertragung einer PU0 fehlgeschlagen ist. Diese PU wurde eine Folgenummer mit dem Wert 5 zugeordnet. Wie schon erwähnt bleiben die PUs in der AM RLC Einheit so lange gespeichert bis eine positive Empfangsbestätigung empfangen wird. Es wird weiterhin angenommen, daß die wiederholte Übertragung dieser PU0 von der empfangenden AM RLC Einheit angefordert worden ist. Die SDU1 wurde bereits wie oben beschrieben in die PUs 1 bis 4 segmentiert, denen die Folgenummern 10 bis 13 zugeordnet wurden. MAC hat von der AM RLC Einheit die Information bekommen, daß 4 PUs zum ersten Mal übertragen werden müssen und 1 PU zum wiederholten Male übertragen werden muß. Es wird weiterhin angenommen, daß MAC 4 PUs übertragen möchte. Idealerweise wählt der MAC nun eine Kombination zur Datenübertragung aus, die es ermöglicht die zum wiederholten Male zu übertragenden PUs jeweils alleine in einer PDU zu übertragen. Dies ist sinnvoll, da die zum wiederholten Male zu übertragenden PU gewöhnlich nicht in einer Reihenfolge mit den anderen zu übertragenden PUs sind. Werden diese PUs in einer PDU übertragen, so müssen der PDU zusätzlich Kontrolldaten-Erweiterungen hinzugefügt werden.

In diesem Beispiel würde der MAC somit von der AM RLC Einheit die Information erhalten, daß eine PU zum wiederholten Male übertragen werden soll. Daraufhin würde der MAC idealerweise die Kombination 4 auswählen, da er 4 PUs übertragen möchte und eine davon zum wiederholten Male übertragen werden muß. Die PUs 0 bis 3 werden somit in 4 PDUs 1 bis 4 gepackt. PDU1 trägt dabei PU0 und der Wert der Folgenummer wird auf 5 gesetzt. PDUs 2 bis 4 enthalten die PUs 1 bis 3 und die Folgenummern werden auf die Werte 10 bis 12 gesetzt. Die PU4 wird bei der nächsten Anfrage durch den MAC übertragen.

Die PDUs werden an den MAC weitergegeben und schließlich über die Luftschnittstelle übertragen. Auf der Empfängerseite wertet die AM RLC Einheit die Kontrolldaten aus und erkennt an den Folgenummern, daß die PUs nicht in der richtigen Reihenfolge sind. Auf Empfängerseite werden die Kontrolldaten ausgewertet wie in Beispiel 1 beschrieben. Nimmt man an, daß die PU0 das letzte fehlende Segment einer SDU0 war, so wird diese SDU0 zusammengebaut und an die höheren Schichten weitergegeben. Erst wenn auch die PU4 übertragen worden ist, wird die SDU1 zusammengebaut und an die höheren Schichten weitergegeben. Insgesamt wurden für die Übertragung der PUs 0-3 128 Byte benötigt.

Im folgenden **4. Ausführungsbeispiel** wird angenommen, daß der MAC wiederum von der AM RLC Einheit die Information erhalten hat, daß 4 PUs zum ersten Mal übertragen werden müssen und eine PU zum wiederholten Male übertragen werden soll. Es wird angenommen, daß der MAC 4 PUs übertragen möchte und dafür eine Kombination ausgewählt hat bei der mehrere PUs, die nicht in der richtigen Reihenfolge sind, in einer PDU übertragen werden. In diesem Beispiel heißt das, MAC wählt die Kombination 5.

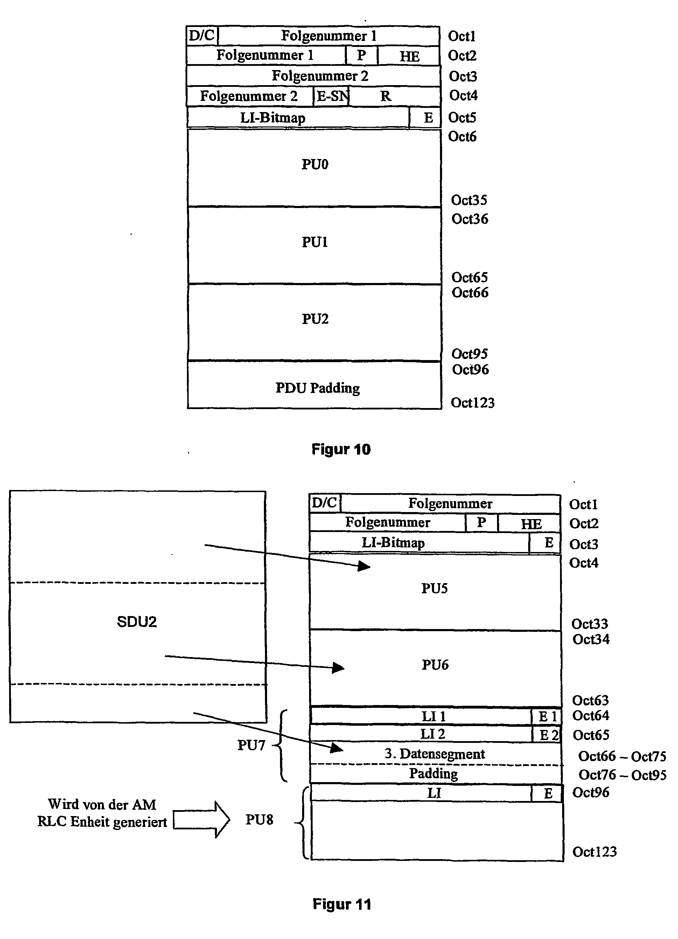

Da die Folgenummer der PU0 nicht in der richtigen Reihenfolge zu den PUs 1-4 ist, muß der PDU eine Kontrolldaten-Erweiterung hinzugefügt werden, wie sie in Figur 9 dargestellt ist. Die PDU die an den MAC weitergegeben wird ist in Figur 10 dargestellt. Die Folgenummer 1 der PDU enthält den Wert 10, da die erste PU in der richtigen Reihenfolge PU1 ist, der die Folgenummer 10 zugeordnet ist. D/C und P Feld werden gesetzt wie oben beschrieben. Dem HE Feld wird ein Wert zugeordnet der angibt, daß eine Kontrolldaten-Erweiterung, die die Folgenummer 2 der PU0 enthält, folgt. Dieser Wert soll in diesem Beispiel 2 sein. Die Kontrolldaten-Erweiterung (siehe Figur 10) besteht aus einem Feld das die Folgenummer 2 enthält, einem Extension Bit SN E (Sequence Number Extension = Folgenummer Erweiterungs Bit) das angibt ob eine weitere Kontrolldaten-Erweiterung oder das LI-Bitmap folgt, sowie einem Feld das für zukünftige Erweiterungen genutzt werden kann. In diesem Fall wird der Folgenummer 2 der Wert 5 zugewiesen, also die Folgenummer der PU0. Das SN-E Bit gibt in diesem Beispiel an, daß der Kontrolldaten-Erweiterung das LI-Bitmap folgt. Dafür wird dem SN-E Bit beispielsweise der Wert 0 zugewiesen. Von der ursprünglich 123 Byte großen PDU sind nun also 5 Byte belegt. Dadurch passen nur noch 3 PUs der Größe 30 Byte in die PDU. Beim Einfügen der PUs in die PDU wird nun eine Regel angewandt, die auch der Empfängerseite bekannt sein soll, so daß diese die Folgenummern der Kontrolldaten-Erweiterung den zum wiederholten Mal zu übertragenen PUs zuordnen kann. In diesem Beispiel sollen die zum wiederholten Mal zu übertragenen PUs, hier also die PU0, zuerst in die PDUs eingefügt werden. Anschließend folgen die PUs 1 und 2. Der Rest der PDU wird mit PDU Padding belegt. Die PDU wird dann an den MAC weitergegeben und schließlich über die Luftschnittstelle übertragen. Auf der Empfängerseite wird die PDU durch die Schichten nach oben gereicht, wo sie schließlich bei der AM RLC Einheit angelangt. Die AM RLC Einheit entnimmt der ersten Folgenummer, daß der ersten PU in der richtigen Reihenfolge die Nummer 10 zugeordnet werden muß. Am HE Feld erkennt die AM RLC Einheit, daß eine Kontrolldatenerweiterung folgt. Aus der Kontrolldatenerweiterung entnimmt sie der Folgenummer 2, daß der ersten zum wiederholten Mal übertragenen PU die Folgenummer 5 zugeordnet ist. Auf Grund der Regel, die festlegt wo die PU innerhalb der PDU zu finden ist, weiß die AM RLC Einheit welcher PU die Folgenummer zugeordnet werden muß. In diesem Beispiel wurden die zum wiederholten Mal zu übertragenen PUs als erste in die PDU eingefügt. Die Folgenummer 2 wird also der PU0 zugeordnet. Aus dem E-SN Feld bekommt die AM RLC Einheit außerdem die Information, daß der Kontrolldaten-Erweiterung das LI-Bitmap folgt. Dem LI-Bitmap entnimmt die AM RLC Einheit dann welche der PUs, und zwar aller in der PDU enthaltenen PUs, mit einem LI Feld anfängt. Wie schon oben erwähnt hat der MAC bei der Übergabe der PDU der AM RLC Einheit die PDU Größe mitgeteilt. Die AM RLC Einheit kann durch das oben beschriebene Auswerten der Kontrolldaten die Größe dieser Kontrolldaten bestimmen. In diesem Fall beträgt die Größe der Kontrolldaten 5 Byte. Aus der Größe der PDU abzüglich der Kontrolldaten kann die AM RLC Einheit die Anzahl der PUs bestimmen, die in der PDU maximal enthalten sein können:

$$\text{Anzahl der PUs} = (\text{PDU Größe} - \text{Kontrolldatengröße}) \; / \; \text{PU Größe}$$

In diesem Beispiel weiß die AM RLC Einheit somit, daß maximal 3 PUs enthalten sind und der Rest der PDU mit PDU Padding aufgefüllt wurde. Die AM RLC Einheit kann somit die PDU korrekt entpacken.

Im **5. Ausführungsbeispiel**, das in Figur 11 dargestellt wird, wird davon ausgegangen, daß eine SDU2 eine Größe von 80 Byte hat. Die SDU wird also in 3 PUs, PU5 bis PU7 segmentiert, wobei PU5 und PU6 nur Nutzdaten enthalten, also keine LI Felder eingefügt werden. PU7 beginnt mit einem ersten LI1 der angibt, daß nach den LIs noch 20 Byte Nutzdaten folgen und dann die SDU endet. Das Extension Bit E1 gibt an, daß ein weiterer LI folgt. Dieser zweite LI2 gibt an, daß der Rest der PU mit PU Padding aufgefüllt wurde. Weiterhin wird angenommen, daß den PUs die Folgenummern 20-22 zugewiesen werden. Außerdem wird davon ausgegangen, daß der MAC sich entschieden hat 4 PUs in der Kombination 5 zu übertragen, obwohl nur die 3 PUs PU5 - PU7 in der AM RLC Einheit zur Übertragung zur Verfügung stehen. Die AM RLC Einheit generiert daraufhin eine PU8, die mit einem LI beginnt, das angibt das der Rest der PU mit PU Padding aufgefüllt wurde. Das Extension Bit gibt an, daß dem LI kein weiterer LI folgt. Der PU8 wird keine Folgenummer von der AM RLC Einheit zugewiesen.

Bei der Generierung der PDU wird der Folgenummer der PDU der Wert 20 zugewiesen. Das HE-Feld gibt an, daß im nächsten Byte das LI-Bitmap folgt, in dem ihm beispielsweise der Wert 2 zugewiesen wird. Die Bits des LI-Bitmap werden so gesetzt, daß sie anzeigen, daß die PUs 7 und 8 mit einem LI-Feld beginnen. Für dieses Beispiel wird wieder angenommen, daß die PU die zuerst in die PDU eingefügt wird mit dem rechten Bit des LI-Bitmap assoziiert ist und die an 7er Stelle eingefügte PU mit dem linken äußeren Bit assoziiert ist. Weiterhin wird für dieses Beispiel angenommen, das ein Bit, das auf 1 gesetzt wird, angibt daß die zugehörige PU mit einem LI Feld anfängt. In diesem Beispiel müßten somit also das von rechts 3. und 4. Bit des LI-Bitmaps auf 1 und alle anderen Bits auf 0 gesetzt werden. Das dem LI-Bitmap folgende Erweiterungs Bit E zeigt an, daß kein weiteres LI-Bitmap folgt. Die PUs 5 bis 8 werden dann in die PDU eingefügt und die PDU wird an MAC weitergegeben und schließlich über die Luftschnittstelle übertragen. Im Empfänger wird die PDU wiederum durch die Schichten nach oben gegeben bis MAC die PDU schließlich zusammen mit der Information über die Größe der PDU an die AM RLC Einheit gibt.

Die AM RLC Einheit entnimmt der Folgenummer, daß die erste PU in der richtigen Reihenfolge der Folgenummer 20 zugeordnet ist. Aus dem HE-Feld erkennt die AM RLC Einheit, daß im nächsten Byte das LI-Bitmap folgt. Das dem LI-Bitmap folgende E-Bit sagt aus, daß kein weiterer LI-Bitmap folgt. Insgesamt sind also 3 Byte von Kontrolldaten belegt. Vom MAC hatte die AM RLC Einheit die Information erhalten, daß die PDU ein Größe von 123 Byte hat. Für die PUs sind also 120 Byte übrig. Da die AM RLC Einheit auch die Größe der PUs kennt, in diesem Beispiel 30 Byte, weiß sie daß maximal 4 PUs in der PDU enthalten sind. Die AM RLC Einheit untersucht dann das LI-Bitmap und erkennt daraus, welche PUs mit einem LI-Feld beginnen. In diesem Fall erkennt die AM RLC Einheit das die PUs PU7 und PU8 mit einem LI-Feld anfangen daran, daß die von rechts 3. und 4. Bits des LI-Bitmap auf den Wert 1 gesetzt wurden. Die PUs PU5 und PU6 werden von der AM RLC Einheit aus der PDU entnommen und die AM RLC Einheit weißt ihnen die Folgenummern 20 und 21 zu. Der PU7 wird die Folgenummer 22 von der AM RLC Einheit zugewiesen. Dem ersten LI der PU7 entnimmt die AM RLC Einheit, daß die ersten 10 Bytes nach den LIs die letzten 10 Bytes einer SDU sind. Durch das E-Bit E1 weiß die AM RLC Einheit, daß ein weiterer LI folgt. Dieser zweite LI2 gibt an daß der Rest der PU mit PU Padding aufgefüllt wurde. Die AM RLC Einheit entnimmt dann der PU die letzten 10 Bytes der SDU2 und fügt sie zu den PUs 5 und 6 hinzu, wodurch sich wieder die ursprüngliche SDU2 ergibt, welche dann an die höheren Schichten weitergegeben werden kann. Dem LI der PU8 entnimmt die RLC Einheit, daß der Rest der PU mit PU Padding gefüllt wurde, also keine Nutzdaten enthalten sind. Darufhin wird diese PU ignoriert oder gelöscht und es wird ihr auch keine Folgenummer zugewiesen.

## Patentansprüche

1. Verfahren zum Austausch von Datenpaketen zwischen zwei Diensteerbringern (RLC, MAC) eines Funkübertragungssystems, wobei ein erster Diensteerbringer (RLC)

    a) ein erstes Datenpaket (SDU) an einem ersten Dienstzugangspunkt (RB) übernimmt,
    b) es in mehrere erste Datensegmente (PUi) unterteilt,
    c) aus einem oder mehreren der ersten Datensegmente (PUi) und einem Protokolldatenblock eine Protokolldateneinheit (PDU) erzeugt und
    d) die Protokolldateneinheit (PDU) über einen zweiten Dienstzugangspunkt an den zweiten Diensteerbringer (MAC) übergibt,

    **dadurch gekennzeichnet,**
    **dass** der Protokolldatenblock ein erstes Kontrolldatenfeld (LI-Bitmap) aufweist, wobei das erste Kontrolldatenfeld (LI-Bitmap) angibt, welche der in der Protokolldateneinheit (PDU) vorhandenen ersten Datensegmente (PUi) zumindest einen Längenindikator (LI) als zweites Kontrolldatenfeld (LI) enthalten.

2. Verfahren nach Anspruch 1,
    **dadurch gekennzeichnet,**
    **dass** die Protokolldateneinheit (PDU) zumindest noch ein zweites Datensegment (PU0) eines zweiten Datenpaketes enthält und dass das erste Kontrolldatenfeld (LI-Bitmap) angibt, welche der in der Protokolldateneinheit (PDU) vorhandenen ersten und zweiten Datensegmente (PU0, PUi) zumindest einen Längenindikator (LI) als zweites Kontrolldatenfeld (LI) aufweisen.

**3.** Verfahren nach Anspruch 1 oder 2,
**dadurch gekennzeichnet,**
**dass** der Längenindikator (LI) angibt, wo das Datenpaket (SDU) innerhalb des entsprechenden Datensegments (PU0, PUi) endet.

**4.** Verfahren nach Anspruch 3,
**dadurch gekennzeichnet,**
**dass** dem Längenindikator (LI1) ein weiteres Kontrolldatenfeld (LI2) nachgeordnet ist und das weitere Kontrolldatenfeld (LI2) angibt, ob nach der durch den Längenindikator (LI1) vorgegebenen Stelle Fülldaten folgen.

**5.** Verfahren nach einem der Ansprüche 1 bis 4,
**dadurch gekennzeichnet,**
**dass** den Datensegmenten (PU0, PUi) eines Datenpaketes (SDU1, SDU0) jeweils Folgenummern derart zugewiesen werden, dass sich die Folgenummern jeweils benachbarter Datensegmente (PU0, PUi) um eine vorgegebene Einheit unterscheiden.

**6.** Verfahren nach Anspruch 5,
**dadurch gekennzeichnet,**
**dass** der Protokolldatenblock ein erstes Folgenummerfeld aufweist und das erste Folgenummerfeld (FN1) eine Zahl repräsentiert, welche der Folgenummer des in der Protokolldateneinheit (PDU) zuerst auftretenden ersten Datensegments (PU1) entspricht.

**7.** Verfahren nach Anspruch 1, 2 oder 6,
**dadurch gekennzeichnet,**
**dass** die Protokolldateneinheit (PDU) sowohl erstmals an den zweiten Diensteerbringer (MAC) zu übergebende erste Datensegmente (PUi) als auch nochmals angeforderte zweite Datensegmente (PU0) eines zweiten Datenpakektes (SDU0) enthält, dass dem ersten Kontrolldatenfeld (LI-Bitmap) eine Kontrolldatenerweiterung vorangestellt wird und die Kontrolldatenerweiterung zumindest ein zweites Folgenummerfeld (FN2) sowie ein Indikatorfeld (E-SN) enthält, wobei das zweite Folgenummerfeld (FN2) eine Zahl repräsentiert, welche der Folgenummer des zuerst in der Protokolldateneinheit auftretenden, nochmals zu übergebenden zweiten Datensegments (PU0) entspricht und das Indikatorfeld (E-SN) anzeigt, ob der Kontrolldatenerweiterung das erste Kontrolldatenfeld (LI-Bitmap) oder Nutzdaten folgen.

**8.** Verfahren nach Anspruch 7,
**dadurch gekennzeichnet,**
**dass** die ersten und zweiten Datensegmente (PU0, PUi) jeweils als Gruppe zusammengefasst sind und innerhalb ihrer Gruppe entsprechend ihrer Folgenummer aufeinander folgen.

**9.** Verfahren nach einem der Ansprüche 1 bis 8,
**dadurch gekennzeichnet,**
**dass** dem ersten Kontrolldatenfeld (LI-Bitmap) zumindest ein weiteres Kontrolldatenfeld nachgeordnet ist.

**10.** Verfahren nach Anspruch 7,
**dadurch gekennzeichnet,**
**dass** der erste Diensteerbringer (RLC) dem zweiten Diensteerbringer (MAC) auf Anfrage die Anzahl der zu übergebenden ersten Datensegmente (PUi) und die Anzahl der zu übergebenden zweiten Datensegmente (PU0) mitteilt und der zweite Diensteerbringer (MAC) daraufhin die optimale Kombination der Anzahl und Größe der ihm zu übergebenden Protokolldateneinheiten (PDU) vorgibt.

**Claims**

**1.** Method for exchanging data packets between two service providers (RLC, MAC) of a radio transmission system, wherein a first service provider (RLC)

    a) retrieves a first data packet (SDU) at a first service access point (RB),
    b) divides it into a number of first data segments (PUi),
    c) generates a protocol data unit (PDU) from one or more of the first data segments (PUi) and a protocol data block and

d) transfers the protocol data unit (PDU), via a second service access point, to the second service provider (MAC),

**characterised in that** the protocol data block has a first control data field (LI bit map) wherein said first control data field (LI bit map) indicates which first data segments (PUi) contained in the protocol data unit (PDU) contain at least a length indicator (L1) as a second control data field (LI).

2. Method according to claim 1,
**characterised in that** the protocol data unit (PDU) contains at least a second data segment (PU0) of a second data packet and **in that** the first control data field (LI bitmap) indicates which of the first and second data segments (PUO, PUi) contained in the protocol data unit (PDU) have at least a length indicator (L1) as a second control data field (LI).

3. Method according to claim 1 or 2,
**characterised in that** the length indicator (LI) indicates where the data packet (SDU) ends within the corresponding data segment (PUO, PUi).

4. Method according to claim 3,
**characterised in that** the length indicator (LI1) is followed by a further control data field (LI2) and the further control data field (LI2) indicates whether filler data follow after the location prescribed by the length indicator (LI1).

5. Method according to one of claims 1 to 4,
**characterised in that** sequence numbers are allocated to each of the data segments (PUO, PUi) of a data packet (SDU1, SDUO) such that the sequence numbers of adjacent data segments (PUO, PUi) respectively differ by a prescribed unit.

6. Method according to claim 5,
**characterised in that** the protocol data block has a first sequence number field and the first sequence number field (FN1) represents a number which corresponds to the sequence number of the first data segment (PU1) that occurs first in the protocol data unit (PDU).

7. Method according to claim 1, 2 or 6,
**characterised in that** the protocol data unit (PDU) contains first data segments (PUi) to be transmitted for the first time to the second service provider (MAC) and contains repeatedly requested second data segments (PU0) of a second data packet (SDUO),
**in that** a control data extension is followed by the first control data field (LI bitmap), and the control data extension contains at least a second sequence number field (FN2) and an indicator field (E-SN), wherein the second sequence number field (FN2) represents a number which corresponds to the sequence number of the second data segment (PU0) that occurs first in the protocol data unit and that has to be transmitted again and the indicator field (E-SN) indicates whether the control data extension is followed by the first control data field (LI bitmap) or by user data.

8. Method according to claim 7,
**characterised in that** the first and second data segments (PUO, PUi) are each combined as a group and follow one another within their group according to their sequence number.

9. Method according to one of claims 1 to 8,
**characterised in that** the control data field (LI bitmap) is followed by at least one further control data field.

10. Method according to claim 7,
**characterised in that** the first service provider (RLC) when requested informs the second service provider (MAC) about the number of first data segments (PUi) to be transmitted and about the number of second data segments (PU0) to be transmitted and the second service provider (MAC) subsequently prescribes the optimal combination of the number and size of the protocol data units (PDU) to be transmitted to said second service provider.

**Revendications**

1. Procédé d'échange de paquets de données entre deux fournisseurs de services (RLC, MAC) d'un système de transmission radio, un premier fournisseur de services (RLC)

a) prenant en charge un premier paquet de données (SDU) au niveau d'un premier point d'accès à des services (RB),

b) le subdivisant en plusieurs premiers segments de données (PUi),

c) générant une unité de données de protocole (PDU) à partir d'un ou de plusieurs des premiers segments de données (PUi) et d'un bloc de données de protocole et

d) transférant l'unité de données de protocole (PDU) au deuxième fournisseur de services (MAC) via un deuxième point d'accès à des services,

**caractérisé en ce que** le bloc de données de protocole présente un premier champ de données de contrôle (LI-Bitmap), le premier champ de données de contrôle (LI-Bitmap) indiquant lesquels des premiers segments de données (PUi) présents dans l'unité de données de protocole (PDU) contiennent au moins un indicateur de longueur (LI) en tant que deuxième champ de données de contrôle (LI).

2. Procédé selon la revendication 1, **caractérisé en ce que** l'unité de données de protocole (PDU) contient au moins encore un deuxième segment de données (PU0) d'un deuxième paquet de données et **en ce que** le premier champ de données de contrôle (LI-Bitmap) indique lesquels des premiers et deuxièmes segments de données (PUO, PUi) présents dans l'unité de données de protocole (PDU) comportent au moins un indicateur de longueur (LI) en tant que deuxième champ de données de contrôle (LI).

3. Procédé selon la revendication 1 ou 2, **caractérisé en ce que** l'indicateur de longueur (LI) indique où le paquet de données (SDU) se termine à l'intérieur du segment de données correspondant (PUO, PUi).

4. Procédé selon la revendication 3, **caractérisé en ce que** l'indicateur de longueur (LI1) est suivi d'un autre champ de données de contrôle (LI2) et l'autre champ de données de contrôle (LI2) indique si la position spécifiée par l'indicateur de longueur (LI1) est suivie de données de remplissage.

5. Procédé selon l'une des revendications 1 à 4,
**caractérisé en ce que** des numéros de séquence sont attribués à chacun des segments de données (PUO, PUi) d'un paquet de données (SDU1, SDUO) de manière telle que les numéros de séquence de segments de données respectivement voisins (PUO, PUi) diffèrent d'une unité spécifiée.

6. Procédé selon la revendication 5, **caractérisé en ce que** le bloc de données de protocole comporte un premier champ de numéro de séquence et le premier champ de numéro de séquence (FN1) représente un nombre qui correspond au numéro de séquence du premier segment de données (PU1) qui se présente en premier dans l'unité de données de protocole (PDU).

7. Procédé selon la revendication 1, 2 ou 6 **caractérisé en ce que** l'unité de données de protocole (PDU) contient non seulement des premiers segments de données (PUi) à transférer pour la première fois au deuxième fournisseur de services (MAC), mais aussi des deuxièmes segments de données (PU0) d'un deuxième paquet de données (SDUO) demandés une nouvelle fois, **en ce que** le premier champ de données de contrôle (LI-Bitmap) est précédé d'un élargissement des données de contrôle et l'élargissement des données de contrôle contient au moins un deuxième champ de numéro de séquence (FN2) ainsi qu'un champ d'indicateur (E-SN), le deuxième champ de numéro de séquence (FN2) représentant un nombre qui correspond au numéro de séquence du deuxième segment de données (PU0) qui se présente en premier dans l'unité de données de protocole et qui doit être transféré une nouvelle fois et le champ d'indicateur (E-SN) indiquant si l'élargissement des données de contrôle est suivi du premier champ de données de contrôle (LI-Bitmap) ou de données utiles.

8. Procédé selon la revendication 7, **caractérisé en ce que** les premiers et deuxièmes segments de données (PUO, PUi) sont respectivement assemblés en groupe et se suivent dans ce groupe selon leur numéro de séquence.

9. Procédé selon l'une des revendications 1 à 8,
**caractérisé en ce que** le premier champ de données de contrôle (LI-Bitmap) est suivi d'au moins un autre champ de données de contrôle.

10. Procédé selon la revendication 7, **caractérisé en ce que** le premier fournisseur de services (RLC) communique au deuxième fournisseur de services (MAC), sur demande, le nombre des premiers segments de données (PUi) à transférer et le nombre des deuxièmes segments de données (PU0) à transférer et le deuxième fournisseur de services (MAC) spécifie ensuite la combinaison optimale du nombre et de la taille des unités de données de protocole (PDU) à lui transférer.

Festnetzverbindung 2

Luftschnitt
stelle

Festnetzverbindung 1

| UE |

| Node B |

| RNC |

| GSN |

**Figur 1**

| RLC |
| MAC |
| Layer 1 |

| Layer 1 |

| RLC |
| MAC |

Festnetzverbindung 1

Luftschnittstelle

UE

Node B

RNC

**Figur 2**

**Figur 3**

a)

b)

c)

**Figur 4**

**Figur 5**

| D/C | Folgenummer | | | Oct1 |
| --- | --- | --- | --- | --- |
| Folgenummer | | P | HE | Oct2 |
| LI Bitmap | | | E | Oct3 |
| PU1 | | | | |
| PU2 | | | | |
| ⋮ | | | | |
| PUn | | | | |
| | | | | OctM |

**Figur 6**

| D/C | Folgenummer | | | Oct1 |
| --- | --- | --- | --- | --- |
| Folgenummer | | P | HE | Oct2 |
| | | | | Oct3 |
| PU1 | | | | |
| | | | | Oct32 |

| D/C | Folgenummer | | | Oct1 |
| --- | --- | --- | --- | --- |
| Folgenummer | | P | HE | Oct2 |
| | | | | Oct3 |
| PU2 | | | | |
| | | | | Oct32 |

| D/C | Folgenummer | | | Oct1 |
| --- | --- | --- | --- | --- |
| Folgenummer | | P | HE | Oct2 |
| | | | | Oct3 |
| PU3 | | | | |
| | | | | Oct32 |

| D/C | Folgenummer | | | Oct1 |
| --- | --- | --- | --- | --- |
| Folgenummer | | P | HE | Oct2 |
| LI 1 | | | E 1 | Oct3 |
| LI 2 | | | E 2 | Oct4 |
| 4. Datensegment | | | | Oct5 – Oct14 |
| Padding | | | | Oct15 – Oct 32 |

SDU1

PU 4

**Figur 7**

| D/C | Folgenummer | | | Oct1 |
|-----|-------------|---|---|------|
| Folgenummer | | P | HE | Oct2 |
| LI-Bitmap | | | E | Oct3 |
| | | | | Oct4 |
| PU1 | | | | |
| | | | | Oct33 |
| | | | | Oct34 |
| PU2 | | | | |
| | | | | Oct63 |
| | | | | Oct64 |
| PU3 | | | | |
| | | | | Oct93 |
| LI 1 | | | E 1 | Oct94 |
| LI 2 | | | E 2 | Oct95 |
| 4. Datensegment | | | | Oct96 - Oct105 |
| Padding | | | | Oct106 - Oct123 |

SDU1

PU4

**Figur 8**

| Sequence Number | | | Oct1 |
|-----------------|------|---|------|
| Sequence Number | E-SN | R | Oct2 |

**Figur 9**

| | | | |
|---|---|---|---|
| D/C | Folgenummer 1 | | Oct1 |
| Folgenummer 1 | | P | HE | Oct2 |
| Folgenummer 2 | | | Oct3 |
| Folgenummer 2 | E-SN | R | Oct4 |
| LI-Bitmap | | E | Oct5 |

| | |
|---|---|
| | Oct6 |
| PU0 | |
| | Oct35 |
| | Oct36 |
| PU1 | |
| | Oct65 |
| | Oct66 |
| PU2 | |
| | Oct95 |
| | Oct96 |
| PDU Padding | |
| | Oct123 |

**Figur 10**

SDU2

| | | | |
|---|---|---|---|
| D/C | Folgenummer | | Oct1 |
| Folgenummer | | P | HE | Oct2 |
| LI-Bitmap | | E | Oct3 |

| | |
|---|---|
| | Oct4 |
| PU5 | |
| | Oct33 |
| | Oct34 |
| PU6 | |
| | Oct63 |
| LI 1 | E 1 | Oct64 |
| LI 2 | E 2 | Oct65 |
| 3. Datensegment | Oct66 – Oct75 |
| Padding | Oct76 – Oct95 |
| LI | E | Oct96 |
| | |
| | Oct123 |

PU7

Wird von der AM
RLC Enheit generiert ⟹ PU8

**Figur 11**

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0021253 A